(19) Europäisches Patentamt
European Patent Office
Office européen des brevets

(11) **EP 2 550 438 B1**

(12) **FASCICULE DE BREVET EUROPEEN**

(45) Date de publication et mention
de la délivrance du brevet:
**29.11.2017 Bulletin 2017/48**

(21) Numéro de dépôt: **11712903.1**

(22) Date de dépôt: **15.02.2011**

(51) Int Cl.:
**F01N 9/00** *(2006.01)*  **F01N 11/00** *(2006.01)*
**F01N 3/20** *(2006.01)*

(86) Numéro de dépôt international:
**PCT/FR2011/050309**

(87) Numéro de publication internationale:
**WO 2011/117492 (29.09.2011 Gazette 2011/39)**

(54) **PROCEDE DE CONTROLE DES EMISSIONS POLLUANTES D'UN MOTEUR A COMBUSTION**

VERFAHREN ZUR STEUERUNG DER ABGASEMISSIONEN EINER BRENNKRAFTMASCHINE

METHOD TO CONTROL EXHAUST EMISSIONS FROM A COMBUSTION ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.03.2010  FR 1052139**

(43) Date de publication de la demande:
**30.01.2013  Bulletin 2013/05**

(73) Titulaire: **PSA Automobiles SA
78300 Poissy (FR)**

(72) Inventeurs:
  • **GRISE, Clément
    F-75011 Paris (FR)**
  • **CHARIAL, Christophe
    F-78000 Versailles (FR)**

(74) Mandataire: **Renous Chan, Véronique
    PSA Automobiles SA
    VPIB - LG081
    18 rue des Fauvelles
    92250 La Garenne Colombes (FR)**

(56) Documents cités:
**WO-A2-2009/135063     DE-A1-102008 036 885
US-A1- 2006 130 458     US-A1- 2009 056 315**

**Description**

La présente invention concerne un procédé de contrôle des émissions polluantes d'un moteur à combustion.

L'utilisation de combustible fossile comme le pétrole ou le charbon dans un système de combustion, en particulier le carburant dans un moteur, entraine la production en quantité non négligeable de polluants qui peuvent être déchargés par l'échappement dans l'environnement et y causer des dégâts. Parmi ces polluants, les oxydes d'azote (appelés $NO_x$) posent un problème particulier puisque ces gaz sont soupçonnés d'être un des facteurs qui contribuent à la formation des pluies acides et à la déforestation. En outre, les $NO_x$ sont liés à des problèmes de santé pour les humains et sont un élément clé de la formation de « smog » (nuage de pollution) dans les villes. La législation impose des niveaux de rigueur croissante pour leur réduction et/ou leur élimination de sources fixes ou mobiles.

Parmi les polluants que les législations tendent à réglementer de façon de plus en plus stricte figurent également les suies ou autres matériaux particulaires résultant essentiellement d'une combustion incomplète du carburant, plus particulièrement lorsque le moteur est opéré en mélange dit pauvre, c'est-à-dire avec un excédent d'oxygène (d'air) par rapport à la stoechiométrie de la réaction de combustion. Les mélanges pauvres sont de règle pour les moteurs dits diesel, dont l'allumage est obtenu par compression.

Pour ces deux grandes catégories de polluants, différents moyens de dépollution et stratégies de combustion sont mis en oeuvre.

Pour limiter les émissions de particules, la technologie des filtres à particules se généralise peu à peu pour tous les véhicules équipés d'un moteur diesel. Cette technologie consiste essentiellement à forcer le passage des gaz d'échappement à travers des canaux poreux d'une structure nid d'abeille en céramique. Les suies ainsi filtrées s'accumulent puis sont éliminées dans une opération de régénération du filtre pendant laquelle elles sont brûlées. Pour obtenir cette régénération, il est toutefois nécessaire d'augmenter la température des gaz d'échappement, ce qui est typiquement obtenu en enrichissant ceux-ci avec du carburant (injecté directement dans la ligne d'échappement ou dans la chambre de combustion du moteur, pendant la phase d'échappement du cycle de combustion) et/ou en augmentant la charge du moteur. Par ailleurs, un agent catalytique est utilisé pour faciliter la combustion des suies, cet agent étant soit déposé de façon permanente dans les canaux du filtre, soit introduit comme additif avec le carburant, cette dernière technologie permettant d'opérer avec des températures de combustion plus basses que celles requises avec des filtres catalysés.

Pour limiter les émissions de $NO_x$, la principale voie mise en oeuvre sur les véhicules actuels a été celle de la réduction des émissions à la source, autrement dit, en opérant le moteur dans des conditions telles que les taux de $NO_x$ produits soient inférieurs aux taux limites. Ces conditions sont réunies notamment en pilotant de manière très fine les différents paramètres du moteur, à commencer par les paramètres d'injection de carburant et de réinjection à l'admission d'une partie des gaz d'échappement, ceci afin de réduire la concentration en oxygène favorable à la formation des oxydes d'azote.

Toutefois, il n'est pas possible de réduire drastiquement les émissions à la source sans limiter certaines performances du moteur. C'est pourquoi il a été proposé différentes solutions pour dénitrifier les gaz d'échappement. Une solution ayant fait la preuve de son efficacité notamment pour les poids lourds est la conversion chimique par réduction des oxydes d'azote au moyen d'un agent réducteur directement injecté dans la ligne d'échappement. Ainsi, une solution de post-traitement ayant fait la preuve de son efficacité est l'utilisation d'une source d'ammoniac ($NH_3$), telle que l'urée aqueuse. L'ammoniac réagit avec les $NO_x$ sur un catalyseur pour former de l'azote $N_2$ inerte et de l'eau $H_2O$. Cette solution est essentiellement connue sous le nom de son acronyme anglais SCR pour « Selective Catalytic Reduction ».

Un réducteur communément utilisé est de l'ammoniac, stocké sous forme d'urée, l'ammoniac étant obtenu par thermolyse/ hydrolyse de l'urée dans la ligne d'échappement selon les réactions suivantes :

$$(NH_2)2CO \rightarrow HNCO + NH_3 \text{ : thermolyse à 120°C} \qquad (1)$$

$$HNCO + H_2O \rightarrow CO_2 + NH_3 \text{ : hydrolyse à 180°C} \qquad (2)$$

Le catalyseur SCR sert ensuite à favoriser la réduction des $NO_x$ par $NH_3$ selon les 3 réactions suivantes:

$$4NH_3 + 4NO + O_2 \rightarrow 4N_2 + 6H_2O \qquad (3)$$

$$2NH_3 + NO + NO_2 \rightarrow 2N_2 + 3H_2O \qquad (4)$$

$$8NH_3 + 6NO_2 \rightarrow 7N_2 + 12H_2O \qquad (5)$$

L'ammoniac étant lui-même un gaz considéré comme toxique, il importe que la quantité d'urée injectée soit à tout moment adaptée à la quantité d'oxydes d'azote à traiter.

Un simple contrôle en boucle fermé essentiellement basé sur l'information fournie par un capteur de $NO_x$

disposé en aval du piège à $NO_x$ est exclu pour un moteur opérant de façon prédominante en régimes transitoires, comme un moteur d'un véhicule automobile.

La quantité de $NO_x$ peut toutefois être estimée notamment sur la base d'une cartographie des émissions d'oxydes d'azote en fonction notamment des conditions de fonctionnement du moteur, autrement dit, essentiellement en fonction de la demande de régime et de couple.

Une difficulté majeure des systèmes de traitement des $NO_x$ par réduction sélective est d'obtenir une efficacité nominale de traitement des $NO_x$ en fonction de la dispersion des véhicules produits. Dans la demande de brevet FR 0958102, il a été proposé un modèle permettant à tout instant de prédire à tout instant l'efficacité d'un système de traitement des $NO_x$, et de la comparer avec l'efficacité effectivement observée, notamment sur la base d'une mesure de la quantité de $NO_x$ résiduels présente en aval du catalyseur SCR.

Le modèle prédictif de l'efficacité opère à la vitesse d'horloge du calculateur, par exemple de 10Hz. Il en est de même pour l'efficacité observée. Cette fréquence est bien évidemment très grande par rapport à la vitesse avec laquelle on peut éventuellement procéder à certains ajustements et donc pour éviter des commandes erratiques, selon une première variante de l'invention, un filtre est appliqué à la valeur de l'efficacité observée.

Ceci permet de tenir compte de la grande variation du signal $NO_x$ en aval du dispositif de traitement, variation qui est due notamment à l'extrême variabilité du débit des gaz d'échappement et des points de fonctionnement du moteur.

Plus précisément, la présente invention a ainsi pour objet un procédé de contrôle d'un système de traitement des $NO_x$ présents dans des gaz d'échappement d'un moteur à combustion interne par un agent réducteur injecté dans la ligne d'échappement en amont d'un catalyseur de réduction des $NO_x$, ledit contrôle comportant une observation de l'efficacité du traitement comportant une mesure de la quantité de $NO_x$ présente en aval du catalyseur de réduction des $NO_x$, caractérisée en ce que l'on applique un filtre à la valeur observée de l'efficacité.

Compte-tenu de la grande variation du signal $NO_x$ aval en raison des changements de débits et des points de fonctionnement, l'application d'un tel filtre rend les variations du signal plus lisible et rend l'analyse de l'efficacité mesurée plus robuste.

Ce filtre est par exemple un filtre du type passe-bas et applique une fonction de lissage ou de régression, typiquement sur un échantillon glissant au cours du temps, à l'exemple d'une fonction de régression polynomiale, logarithmique ou exponentielle.

La valeur filtrée est figée dans certaines conditions environnementales, autrement non mises à jour pendant une période donnée, en supposant que la valeur reste inchangée.

Une première condition environnementale considérée est une demande de couple en dehors d'une plage de référence, autrement dit une demande de couple inférieure à un seuil de couple minimal ou est supérieur à un seuil de couple maximal. En effet, dans certaines phases de roulage, l'émission de $NO_x$ est nulle ou quasi nulle, par exemple lors des levées de pied de la pédale d'accélérateurs, phases pendant laquelle le rapport entre l'efficacité prévue et l'efficacité observée revient à effectuer une division de zéro par zéro, ce qui bien entendu peut conduire à une conclusion de dysfonctionnement du système totalement erronée. A l'inverse, les émissions de $NO_x$ peuvent augmenter rapidement notamment si le conducteur impose une très forte demande de couple (autrement dit si le conducteur demande une très forte accélération).

Dans une variante, parmi les conditions environnementales figurent l'observation d'une valeur de $NO_x$ en aval du catalyseur SCR inférieur à un seuil minimal fonction de la vitesse du véhicule. Dans ces conditions, il peut en effet être estimé que le capteur $NO_x$ en aval du catalyseur SCR présente un dysfonctionnement, qui le plus souvent est seulement transitoire.

Une autre condition environnementale qui peut avantageusement être prise en compte pour procéder au figeage du filtre est l'observation d'une température du catalyseur SCR en dehors d'une plage de température de référence, valeur qui peut être considérée comme liée à un dysfonctionnement des moyens d'estimation de cette température.

Dans une variante, des saturations sont de plus mises en place pour conserver l'efficacité filtrée dans une plage de valeur jugée réaliste, et toute valeur mesurée et filtrée en dehors de cette plage est remplacée par la borne de la plage de valeur la plus proche.

L'opération de figeage revient à considérer momentanément que l'efficacité observée du système est constante, sans pour autant interrompre le procédé de supervision du système (qui pour l'essentiel consiste à vérifier que le système a un comportement conforme à la normale, autrement dit que l'efficacité observée correspond à l'efficacité prédite par un modèle), ni le processus de correction (qui consiste essentiellement à modifier les cartographies utilisées pour définir la quantité de réducteur à injecter) si ce processus est déjà en cours.

Si toutefois on observe une durée consécutive de figeage trop élevée, signe par exemple de ce que la demande de couple quitte durablement la plage comprise entre le seuil de couple minimal et le seuil de couple maximal, il est avantageux de stopper toute requête de correction en cours.

Aussi, dans une variante préférée de l'invention, la valeur filtrée, figée ou non, est comparée à une valeur prédite par un modèle, et conditionne un passage en mode de correction de la consigne de stockage de réducteur dans le catalyseur SCR, et l'on interrompt une requête de correction ou on interdit le passage en mode de correction si le figeage dure au-delà d'une donnée de référence.

D'autres détails et caractéristiques avantageuses de l'invention ressortent de la description détaillée faite ci-après en référence aux figures annexées qui montrent :

• Figure 1 : une vue schématique d'un moteur et de sa ligne de traitement des gaz d'échappement ;

• Figure 2: l'allure de la variation de l'efficacité d'un catalyseur SCR en fonction de sa charge en ammoniac ;

• Figure 3: un logigramme illustrant le principe du procédé selon l'invention ;

Il est précisé que par oxydes d'azote $NO_x$ on entend les deux composés azotés dont les émissions sont réglementées à savoir le monoxyde d'azote et le dioxyde d'azote, produits notamment par des moteurs fonctionnant en mélange pauvre, c'est-à-dire avec un excès d'oxygène par rapport à la stoechiométrie de la réaction de combustion du carburant, à l'exemple notamment des moteurs à allumage par compression dits diesels.

Dans la description qui suit, par souci de clarté, il sera systématiquement fait l'hypothèse que l'agent réducteur est injecté tel quel dans la ligne d'échappement, en amont du catalyseur SCR. Ceci est par l'exemple le cas si cet agent de l'hydrogène ou de l'ammoniac stocké sous forme gazeuse ou produit dans un générateur idoine avant d'être introduit de façon contrôlée dans la ligne d'échappement. Toutefois, cet injecteur peut également être introduit sous la forme d'un précurseur, à l'exemple bien connu de l'urée, qui après une réaction de thermolyse et d'hydrolyse, se transforme en ammoniac (voir les équilibres 1 et 2 proposés plus haut).

De plus, on suppose que cet agent réducteur est effectivement de l'ammoniac, et par souci de clarté, la désignation ($NH_3$) est systématiquement dans la suite de la description, même si l'invention n'est pas limitée à ce mode de réalisation.

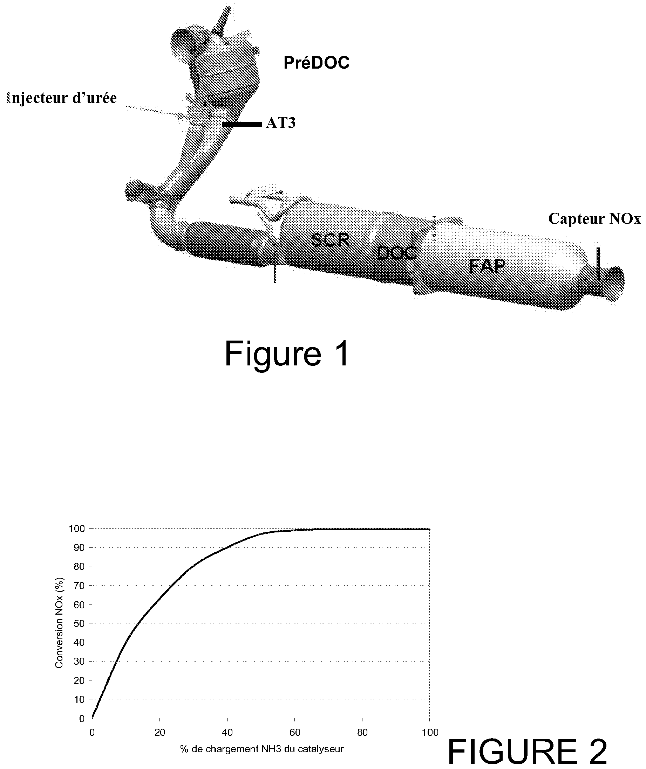

La figure 1 est une vue schématique d'un moteur et de sa ligne de traitement des gaz d'échappement. En entrée de ligne est disposé un catalyseur d'oxydation DOC dont le rôle premier est de convertir le monoxyde de carbone, et la fraction d'hydrocarbures gazeux non imbrûlée ou partiellement brûlée, en dioxyde de carbone, dans les chambres de combustion du moteur. Une telle disposition au plus près du moteur, donc dans la région la plus chaude de la ligne d'échappement garantit un maximum d'efficacité à ce catalyseur, mais n'entre pas dans le cadre spécifique de l'invention.

En continuant dans le sens des gaz d'échappement, on note la présence d'un capteur de température AT3 permettant d'estimer la température des gaz d'échappement en amont du système de traitement SCR.

Ce système de traitement est constitué essentiellement par un injecteur, relié à une source d'agent réducteur non représentée, et en aval de celle-ci, un catalyseur de réduction sélective, dit catalyseur SCR. De façon bien connue un tel catalyseur peut être constitué par une zéolithe déposée sur un support en céramique, par exemple du type cordiérite. Avec un tel catalyseur à base de zéolithe, la réaction de conversion des NO en $NO_2$ est très peu promue. Avec d'autres catalyseurs, contenant du platine ou du palladium, cette conversion sera par contre plus favorisée.

Si le réducteur n'est pas injecté directement sous sa forme finale, mais sous la forme d'un précurseur, à l'exemple d'une solution aqueuse d'urée, le système peut également comporter des moyens propres à faciliter le mélange du précurseur dans les gaz d'échappement tout en autorisant une architecture de ligne relativement compacte.

Sur cette ligne, on a également fait figurer un piège à particules, disposé dans le cas présent en aval du catalyseur de réduction sélective, mais pouvant également être disposé en amont de l'injecteur.

Enfin, un capteur $NO_x$ est prévu afin de s'assurer que les émissions du véhicule sont toujours inférieures à une norme d'émission en vigueur.

La réduction catalytique des $NO_x$ par de l'ammoniac dans un catalyseur SCR consiste essentiellement dans la série des réactions numérotées (3) à (5) mentionnées plus haut, les $NO_x$ réagissant essentiellement avec l'ammoniac stocké dans le catalyseur à un moment donné.

A tout instant, on peut calculer l'efficacité du système, c'est-à-dire le rapport entre d'une part la différence entre la quantité de $NO_x$ émise par le moteur et celle émise par en bout de ligne, et d'autre part la quantité de $NO_x$ émise par le moteur.

La quantité de $NO_x$ émise en bout de ligne est estimée à l'aide d'un capteur NOx monté en aval des dispositifs de traitement.

La quantité de $NO_x$ émise par le moteur peut être obtenue à partir d'une cartographie établie sur la base de mesures réelles des émissions en sortie de moteur, typiquement sur un banc moteur associé à une baie d'analyse chimique et quantificative des gaz d'échappement.

Lors de la phase de mise au point du moteur, on définit pour chaque point de fonctionnement du moteur (que l'on peut définir comme une demande de couple moteur à un régime moteur donné), un ensemble de paramètres moteurs optimisant la performance du véhicule et les émissions du véhicule. Parmi ces paramètres figurent par exemple la quantité de carburant injectée, la quantité d'air frais admise dans le moteur, les conditions d'injection du carburant, les instants d'ouverture des soupapes, le taux de recirculation des gaz d'échappement (EGR), etc. Ces paramètres sont transmis au contrôle moteur au moyen d'un jeu de cartographies qui se permettent de tenir compte de paramètres tels que la température extérieure, l'altitude (pour tenir compte de la raréfaction de l'oxygène), l'état de préchauffage du moteur, etc. Comme les émissions réglementées du véhicule sont prises en compte pour définir les paramètres moteurs, on va bien obtenir pour chaque point de fonctionnement du moteur, dans des conditions extérieures données, un débit massique instantané de $NO_x$ produit par ce moteur. Eventuellement, on peut également prévoir des cartographies pour des conditions de fonctionnement dégradées, par exemple dans l'hypothèse d'une absence de recirculation des gaz due à un disfonctionnement de la vanne EGR

Le système SCR a un fonctionnement nominal si cette efficacité constatée est conforme à un modèle théorique de ce système permettant de définir le potentiel de conversion maximal dans les conditions données. Dans la demande de brevet FR0958102, il est proposé un modèle d'estimation de l'efficacité d'un système de traitement des $NO_x$ par rapport à un potentiel de conversion maximale obtenu si le rapport entre la quantité de réducteur injectée et la quantité de $NO_x$ dans les gaz respecte une consigne donnée et si la masse d'agent réducteur stockée dans le catalyseur respecte une consigne de stockage donnée. D'autres procédés de contrôle comportant une observations de l'efficacité du traitement des $NO_x$ sont proposés dans les documents US 2009/056315 et DE 10 2008 036 885.

La masse de réducteur stockée dans le catalyseur peut être estimée sur la base d'une cartographie de base fonction de la température des gaz d'échappement et du ratio $NO_2/NO$ des $NO_x$, par exemple en intégrant en fonction du temps la vitesse de stockage de l'ammoniac injecté dans la ligne et la vitesse de déstockage de l'ammoniac par réaction des $NO_x$, en posant comme conditions aux limites que cette masse ne peut être inférieure à 0, ladite vitesse de stockage pouvant être estimée uniquement dépendante de la quantité d'ammoniac injectée dans la ligne.

Pour la vitesse de déstockage, on peut avantageusement l'estimer en supposant que le ratio stoechiométrique $R_{NH3/NOx}$ de la réaction de conversion des $NO_x$ par l'ammoniac dépend du ratio $NO_2/NO$ des $NO_x$ de la façon suivante :

$$\text{Si } R_{NO2/NO} < 50\% \text{ alors } R_{NH3/NOx} = 1$$

$$\text{Sinon } R_{NH3/NOx} = (1+8(R_{NO2/NO}-50))/(1+6*(R_{NO2/NO}-50)).$$

Pour un type de catalyseur SCR donné, le potentiel de conversion maximale peut être estimé à partir d'une cartographie fonction de la température du catalyseur de réduction SCR et du ratio $NO_2/NO$ des $NO_x$ à l'entrée du catalyseur SCR, ratio qui peut être lui-même estimé à partir d'une cartographie en fonction de la température et du temps de séjour des gaz d'échappement dans un catalyseur d'oxydation en amont disposé dans la ligne d'échappement, en amont du catalyseur SCR.

Cette cartographie fonction du temps de séjour des gaz d'échappement dans le catalyseur d'oxydation DOC peut être corrigée par un facteur dépendant de l'état de vieillissement du catalyseur DOC, facteur qui peut lui-même être défini comme le rapport entre la durée cumulée d'exposition au-delà d'une première température critique provoquant une dégradation du catalyseur d'oxydation sur une durée de référence d'exposition à la première température critique, pour laquelle la dégradation du catalyseur est complète.

De ce qui précède, il ressort qu'il est possible à tout instant de prédire l'efficacité du système de traitement des $NO_x$, et de comparer cette valeur prédite à la valeur observée. La figure 2 montre la relation entre le chargement en ammoniac du catalyseur et le taux de conversion du traitement des $NO_x$.

Le mode de régulation de base est une régulation en boucle ouverte pour ajuster la masse d'ammoniac stockée dans le catalyseur SCR en fonction de la quantité de $NO_x$ produits par le moteur.

Le signal $NO_x$ en aval du catalyseur SCR comporte du bruit, en particulier des pics anormalement bas ou au contraire anormalement élevés. C'est pourquoi il est proposé selon l'invention de filtrer cette valeur par exemple au moyen d'un filtre passe bas, par exemple de premier ordre, d'un temps de réponse avantageusement de l'ordre de 10 fois la fréquence de mesure (soit typiquement de l'ordre de 1s).

Si la valeur filtrée n'est pas conforme à une valeur attendue (en particulier est en dehors d'une plage de valeur attendue, plage qui peut avantageusement varier en fonction de la vitesse du véhicule, ou si les conditions environnementales sont jugées anormales, par exemple si le couple demandé par le conducteur est trop faible (le conducteur lève le pied de la pédale d'accélérateur), ou au contraire trop forte (le conducteur est « pied au plancher », si la température du catalyseur est en dehors d'une plage de température donnée, ou si la valeur de $NO_x$ mesurée en aval du catalyseur SCR est anormalement basse compte tenu de la vitesse du véhicule, on décide selon l'invention le figeage du filtre.

Ce figeage permet de continuer à opérer la surveillance du bon fonctionnement du dispositif ou de continuer l'exécution d'un correction déjà commencée.

Pour autant, dans une variante préférée de l'invention, ce figeage est lui-même contrôlé. En effet, si les conditions ne le permettent pas, le signal servant à analyser un gain ou une chute d'efficacité lors de la correction de la

masse de $NH_3$ stockée dans le catalyseur SCR est interrompu, bloquant ainsi la correction.

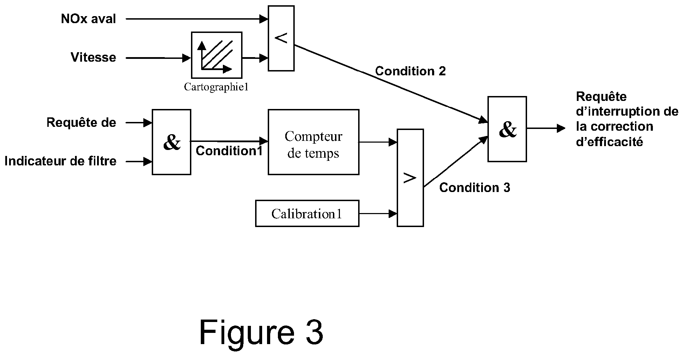

Un exemple d'architecture de cette variante de l'invention est schématisée sur la figure 3.

Ainsi, une interruption de la correction de l'efficacité de traitement est exigée si :

► Une durée consécutive de figeage trop élevée lors de la correction (Condition 3)

► Et si, les $NO_x$ aval sont en-dessous d'une valeur fonction de la vitesse véhicule (Condition 2). Cette valeur de $NO_x$ enveloppe les valeurs maximales instantanées d'émissions de $NO_x$ à l'échappement. On peut paramétrer différentes valeurs comme la durée limite consécutive de figeage (calibration 1) et le niveau de $NO_x$ aval fonction de la vitesse (cartographie1).

Le compteur de temps fonctionne de la façon suivante :

► Il est lancé quand la condition 1 passe à vraie

► Il est remit à zéro quand la condition 1 passe à faux

En mettant une stratégie de supervision du figeage du filtre de l'efficacité de traitement des $NO_x$, il devient possible de corriger l'estimation de la masse de $NH_3$ de façon adapté aux conditions de fonctionnements du système SCR et uniquement lorsqu'il est soumis à des dérives importantes hors de la normale permettant d'éviter une majorité de correction pouvant entrainer une divergence du système.

L'intérêt de l'invention proposée est à la fois technique et économique :

L'intérêt technique majeur est d'offrir une réponse aux craintes des instances réglementaires vis-à-vis de la technologie SCR. Contrôler les corrections réalisées sur le système de traitement des $NO_x$ de façon maitrisée permet d'assurer que le système soit toujours opérationnel et ainsi d'assurer que l'ensemble des véhicules réalise les niveaux de $NO_x$ en vigueur.

L'intérêt économique de l'invention proposée est de dimensionner les composants du système SCR au plus juste. La très faible dispersion sur les composants à imposer pour respecter la norme pour tous les véhicules sans recalage en boucle fermée du système SCR signifierait une augmentation importante du coût et de la masse du véhicule.

## Revendications

1. Procédé de contrôle d'un système de traitement des $NO_x$ présents dans des gaz d'échappement d'un moteur à combustion interne par un agent réducteur injecté dans la ligne d'échappement en amont d'un catalyseur de réduction des $NO_x$, ledit contrôle comportant une observation de l'efficacité du traitement comportant une mesure de la quantité de $NO_x$ présente en aval du catalyseur de réduction des $NO_x$, **caractérisé en ce que** l'on applique un filtre à la valeur observée de l'efficacité, et la valeur filtrée est figée si certaines conditions environnementales sont réunies.

2. Procédé de contrôle selon la revendication 1, **caractérisé en ce que** ledit filtre est du type passe-bas.

3. Procédé de contrôle selon la revendication 1 ou la revendication 2, **caractérisé en ce que** lesdites conditions environnementales comportent une demande de couple moteur en dehors d'une plage de référence.

4. Procédé de contrôle selon l'une des revendications précédentes, **caractérisé en ce que** lesdites conditions environnementales comportent l'observation d'une valeur de $NO_x$ en aval du catalyseur SCR inférieur à un seuil minimal fonction de la vitesse du véhicule.

5. Procédé de contrôle selon l'une quelconque des revendications précédentes, **caractérisé en ce que** lesdites conditions environnementales comportent l'observation d'une température du catalyseur SCR en dehors d'une plage de température de référence.

6. Procédé de contrôle selon l'une quelconque des revendications précédentes, dans lequel la valeur filtrée, figée ou non, est comparée à une valeur prédite par un modèle, et conditionne un passage en mode de correction de la consigne de stockage de réducteur dans le catalyseur SCR, **caractérisé en ce que** l'on interrompt une requête de correction ou on interdit le passage en mode de correction si le figeage dure au-delà d'une donnée de référence.

**Patentansprüche**

1. Verfahren zur Steuerung eines Behandlungssystems der NO$_x$, die in Abgasen einer Brennkraftmaschine gegenwärtig sind, durch ein Reduziermittel, das in den Auspuffstrang stromaufwärts eines NO$_x$-Reduktionskatalysator eingespritzt wird, wobei die Steuerung eine Beobachtung der Effizienz der Behandlung umfasst, die eine Messung der Menge an NO$_x$, die stromabwärts des NO$_x$-Reduktionskatalysators gegenwärtig ist, umfasst, **dadurch gekennzeichnet, dass** man einen Filter an den beobachteten Wert der Effizienz anwendet, und der gefilterte Wert fest vorgegeben wird, falls bestimmte Umgebungsbedingungen vereint sind.

2. Steuerverfahren nach Anspruch 1, **dadurch gekennzeichnet, dass** der Filter des Typs Tiefpassfilter ist.

3. Steuerverfahren nach Anspruch 1 oder Anspruch 2, **dadurch gekennzeichnet, dass** die Umgebungsbedingungen eine Maschinendrehmomentnachfrage außerhalb eines Bezugsbereichs umfassen.

4. Steuerverfahren nach einem der vorhergehenden Ansprüche, **dadurch gekennzeichnet, dass** die Umgebungsbedingungen die Beobachtung eines NO$_x$-Werts stromabwärts des SCR-Katalysators, der niedriger ist als ein Mindestschwellenwert, der von der Geschwindigkeit des Fahrzeugs abhängt, umfassen.

5. Steuerverfahren nach einem der vorhergehenden Ansprüche, **dadurch gekennzeichnet, dass** die Umgebungsbedingungen die Beobachtung einer Temperatur des SCR-Katalysators außerhalb eines Bezugstemperaturbereichs umfassen.

6. Steuerverfahren nach einem der vorhergehenden Ansprüche, wobei der gefilterte Wert, ob er nun fest vorgegeben wird oder nicht, mit einem von einem Modell vorhergesagten Wert verglichen wird und ein Übergehen in Korrekturmodus des Reduktionsmittellagerungssollwerts in dem SCR-Katalysator bedingt, **dadurch gekennzeichnet, dass** man eine Korrekturanfrage unterbricht oder das Übergehen in Korrekturmodus verbietet, falls das feste Vorgeben über eine Bezugsdata hinaus anhält.

**Claims**

1. A method to control a system for treating the NO$_x$ present in exhaust gases of an internal combustion engine by a reducing agent injected in the exhaust line upstream of an NO$_x$ reduction catalyst, said control comprising an observation of the efficiency of the treatment comprising a measurement of the quantity of NO$_x$, present downstream of the NO$_x$ reduction catalyst, **characterized in that** a filter is applied to the observed efficiency value, and the filtered value is fixed if certain environmental conditions are brought together.

2. The control method according to Claim 1, **characterized in that** said filter is of the low-pass type.

3. The control method according to Claim 1 or Claim 2, **characterized in that** said environmental conditions comprise an engine torque request outside a reference range.

4. The control method according to one of the preceding claims, **characterized in that** said environmental conditions comprise the observation of a value of NO$_x$ downstream of the SCR catalyst less than a minimum threshold as function of the speed of the vehicle.

5. The control method according to any one of the preceding claims, **characterized in that** said environmental conditions comprise the observation of a temperature of the SCR catalyst outside a reference temperature range.

6. The control method according to any one of the preceding claims, in which the filtered value, fixed or not, is compared to a value predicted by a model, and conditions a passage into correction mode of the storage setpoint of reducer in the SCR catalyst, **characterized in that** a correction request is interrupted or the passage into correction mode is prohibited if the fixing lasts beyond a reference datum.

PréDOC

Injecteur d'urée

AT3

SCR

DOC

FAP

Capteur NOx

Figure 1

FIGURE 2

NOx aval

Vitesse

Cartographie1

<

Condition 2

Requête de

Indicateur de filtre

&

Condition1

Compteur
de temps

Calibration1

>

Condition 3

&

Requête
d'interruption de
la correction
d'efficacité

Figure 3

## RÉFÉRENCES CITÉES DANS LA DESCRIPTION

**Documents brevets cités dans la description**

- FR 0958102
- US 2009056315 A
- DE 102008036885